# EUROPEAN PATENT SPECIFICATION

(11) **EP 1 755 787 B1**
(45) Date of publication and mention of the grant of the patent: **02.04.2008**
(21) Application number: 04728864.2
(22) Date of filing: 22.04.2004
(51) Int. Cl.: B03C 3/12, F01N 3/01, B03C 3/02

(54) **METHOD AND DEVICE FOR ELECTROSTATICALLY ABATING PARTICULATES IN EXHAUST GASES EMITTED FROM ENGINES**
VERFAHREN UND VORRICHTUNG ZUR ELEKTROSTATISCHEN ABSCHEIDUNG VON TEILCHEN IM ABGAS VON BRENNKRAFTMASCHINEN
PROCEDE ET DISPOSITIF D'AFFAIBLISSEMENT DE PARTICULES DE GAZ D'ECHAPPEMENT EMIS PAR DES MOTEURS

(43) Date of publication of application: 28.02.2007
(73) Proprietor: Techin AG, FL-9495 Triesen (LI)
(72) Inventor: VANELLA, Salvatore, I-61032 Fano (IT)
(74) Representative: Gervasi, Gemma
(86) International application number: PCT/IB2004/001388
(87) International publication number: WO 2005/102535

(56) References cited:
- EP-A- 0 083 845
- EP-A- 0 770 766
- GB-A- 850 321
- US-A- 4 673 416
- US-A- 4 689 056
- US-A- 5 037 456
- US-A- 5 059 219
- PATENT ABSTRACTS OF JAPAN vol. 009, no. 309 (C-318), 5 December 1985 (1985-12-05) & JP 60 147263 A (NIPPON JIDOSHA BUHIN SOGO KENKYUSHO KK;OTHERS: 01), 3 August 1985 (1985-08-03)

## Description

### TECHNICAL FIELD

This invention relates to a method for reducing pollutants. More specifically, it relates to a method for abating particulates found in the exhaust gases emitted from heat engines, especially internal combustion engines of motor vehicles, and from heating systems.

The invention also relates to a device for implementing the method.

### BACKGROUND ART

Motor-vehicle engine and heating system emissions are one of the major sources of air pollution. Solid particles are particularly problematic, especially those with particle size up to 10 µm; from a health standpoint, solid particles smaller than 2.5 µm are especially harmful due to their tendency to accumulate in the lungs and cause disease. Hence, the legally admissible limits of particulate have been decreased over the years and are expected to become even more restrictive in the future. To date, no systems easily applicable to vehicles or heating systems have been devised for achieving satisfactory results in terms of minimizing the fine particulate - the one able to reach the pulmonary membrane. The problem is compounded by the fact that the abatement must occur during a single pass through the specific system, since it is not possible or suitable to adopt solutions such as the partial recirculation of the treated gas.

### SUMMARY OF THE INVENTION

It is an object of this invention to provide a method for abating particulates in a gas stream comprising the exhaust gases of a heat engine or heating system , according to appended claim 1 and a device according to appended claim 6.

In accordance with a preferred embodiment of the invention, the surfaces maintained at a potential able to attract negative charges consist of a set of metal plates. These plates are maintained at a positive potential with respect to earth and, preferably, face a set of plates, which can be identical in appearance to the other set of plates, maintained at a negative potential. This way, an electric field will form between two plates placed opposite to each other: this field will be able to divert the path of the particles, which were previously negatively charged in the area where the negative charges are generated, found in the gas stream until they are captured by the positively charged plates. Preferred embodiments of the invention are object of dependent claims.

### DRAWINGS

Figure 1 shows a schematic view of a device for implementing the method in accordance with this invention.
Figure 2 shows a schematic, detail view of a dispersing grid.
Figure 3 shows a schematic, detail view of a dispersing grid in accordance with an alternative version of the invention.
Figures 4 and 5 show a schematic view of two different versions of the invention.

### DETAILED DESCRIPTION OF THE INVENTION

The following pages illustrate a particular version of a method in accordance with this invention.

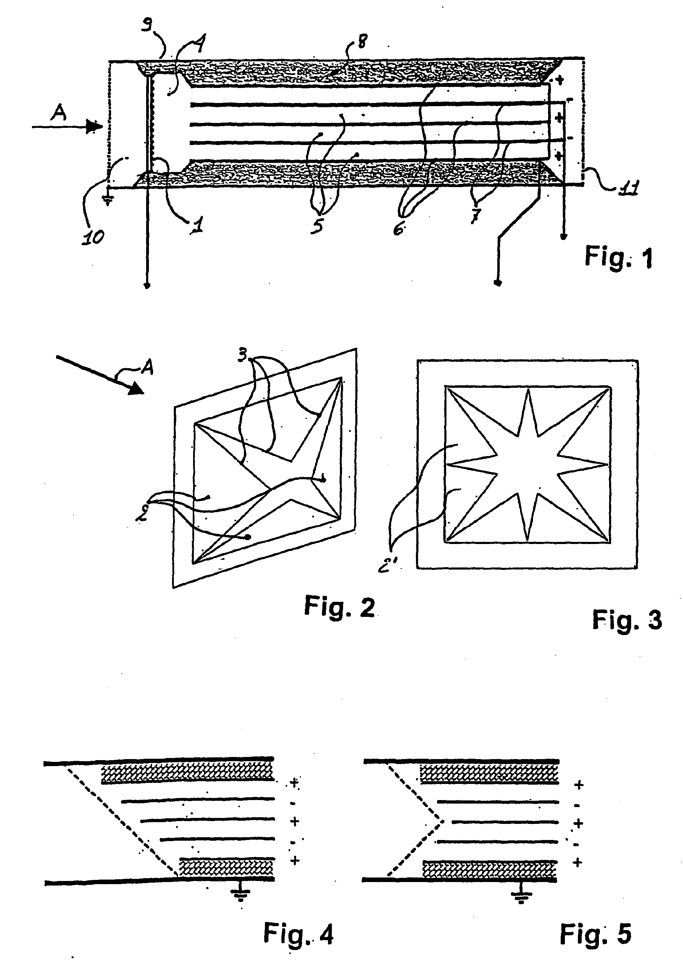

Figure 1 shows the stream of exhaust gases to be treated flow into the device (arrow A) and come into contact with the means (1) for generating the negative electric charges. These means may consist of a grid maintained at a potential able to cause the dispersion of an electron wind from said grid. Ideally, as was already mentioned, said grid will comprise several points in order to take advantage of the known dispersing power. For example, the grid may consist of sheet metal with several openings; ideally, said openings will be made by punching, rather than cutting, so that the edges of the openings have raised bits of sheet metal, comprising borders with several micropoints caused by sheet metal tearing. According to a preferred embodiment of the invention, the grid (1) comprises several square openings (see figure 2). These can be obtained by incising the sheet metal with a pyramidal punch featuring a square section and, then, opening them, using a suitable punch, so that the edges (2) remain slightly raised (see figure). For example, these openings can be raised so that the passage through which the gas flows is about half the size of the punched square area (see figure). The edges (2) comprise the borders (3) obtained through tearing, which feature the micropoints for facilitating dispersion. Ideally, the edges should be bent towards the side downstream with respect to the gas stream in order to reduce the flow resistance of the gas stream. The thickness and material of the grid can be chosen depending on the application and the required combination of strength, flow resistance of the gas stream, electron dispersion, etc. For example, the grid can be made of stainless steel and have a thickness included between 0.1 and 0.5 mm. The size and number per unit of surface of the openings can be chosen as needed, taking into account that a high surface density of openings increases the ionization of the gas stream. Square openings, like those shown in figure 2, can have, for example, sides included between 0.5 and 1.5 cm (a suitable size is approximately equal to 1 cm). The space between one punched area and another of the grid must give the structure adequate strenght, without excessively reducing the passageway of the gas. For example, the space in the type of grid shown in figure 2 could range in size from 3 to 5 mm. Obviously, other configurations are also possible: for example, the square openings could be staggered. For example, figure 3 shows an aperture with eight edges (2') - instead of the four edges of the above described embodiment - thus increasing the overall length of the dispersing borders. Once again, the openings is square but it could also be octagonal, forming eight edges equal in shape and size. The openings could also be hexagonal and have six edges; clearly, other combinations can also be used with regular - like the ones described above - or even irregular shaped openings, depending on functional or constructional needs.

Obviously, other types of dispersing means can be used, depending on needs, instead of a grid.

Figure 1 shows the gas stream flowing through the grid and into area 4, where the solid particles meet the negative electric charges produced by the grid and become negatively charged. Area 4 separates the grid from the plates (6 and 7). There must be an adequate amount of space between the grid (1) and the plates to prevent electric discharge. The gas stream, then, flows through several ducts (5) formed between the facing and appropriately distanced plates (6 and 7). In accordance with a preferred embodiment of the invention, the number of plates is adequate to obtain more than one of said ducts (5). One type of plate (6), the so-called collecting plates, has a positive potential with respect to earth; while the other type of plate (7), the so-called deflector plates, has a negative potential. In this way, a uniform electric field is created between two facing plates that will divert the path of the charged particles towards the plate with positive potential. This way, the particles will tend to be discharged onto the plate with positive potential. Note that the particles, once discharged, tend to stick to the plate permanently, without risk of particle release, even when the device stops operating. Depending on the application, the plates can be sized so that they need replacing more or less frequently or, especially if the device is fitted on a vehicle, so that they need not be replaced during the useful life of the vehicle. If the exhaust gas of a vehicle fitted with a catalytic converter must be treated, it may be advantageous to place the device downstream with respect to the catalytic converter in order to also treat particulates (for example, catalyst residues) coming from the converter. Advantageously, layers (8) of insulating material can be placed between the casing of the device and the outer plates - to delimit the duct through which the gas stream flows. Insulating supports can secure the other plates to the casing (9), or the plates can be held together by their side edges with insulating structures in order to form an easily replaceable "pack" of plates; advantageously, the grid (1) can also be adequately insulated with respect to the casing. The figures show flat plates; however, different shapes are also possible including, for example, several concentric tubes maintained alternatively at positive or negative potential. It is also possible to increase the extension of the grid (1) without changing the dimensions of the duct where it is housed. This can be achieved by positioning the grid differently (for example, slanting) or shaping the grill appropriately (for example, as shown in figures 4 and 5).

The distance between the different plates and the number of plates can be chosen appropriately to obtain optimal abatement, based on the potential at which the plates are maintained. Nevertheless, it is necessary to prevent electric discharge between the plates; this also requires taking into account the dielectric strength of the treated gases, which can provisionally be considered similar to that of moist air. Appropriate layers of material, such as insulating paint, can be applied to the plates to operate with stronger electric field. Furthermore, the plates should preferably have rounded corners.

As was previously mentioned, the length of the plates can be chosen to obtain optimal abatement. It may also be necessary to consider constructional issues, especially if the device is to be fitted in a motor vehicle. Several stages of abatement in series may be foreseen to improve efficiency without increasing excessively the length and/or width of the plates (thus, the size and weight of the device).

In accordance with a preferred embodiment of the invention, each abatement stage (consisting of the flow of gas through one set of accumulator plates) has its own ionization stage. In practice, a grid can be placed in front of every set of collecting plates. Since particles with a smaller mass are generally deflected faster, by the plates maintained at a potential as specified above, a first stage with permanence time may be used. This can be obtained by using shorter plates or by reducing the section through which the gas flows in order to abate or partly abate the finest particulate. Then, this stage can be followed by a stage with longer permanence time to complete the abatement of the larger particles.

The voltage values to be applied to the different parts of the device should be chosen avoiding, as was already mentioned, discharge between the plates. For example, the collecting plates can be maintained between + 2000 and + 4000V; while the deflector plates can be maintained at the opposite potential.

The ionization grid must disperse an adequate charge. For example, potential values (negative) between 3000 and 7000 V (for example, around 5000V) can be applied. The potential values for the plates and grids are given as examples, different values may be used, for example, in order to differently dimension the device, keeping efficiency equal, or, in general, for other functional or constructional needs.

For example, to implement the method of this invention on a car, the device (single-stage) can be sized to obtain an average velocity of the exhaust gas of approximately 2 m/s between 35-cm long flat deflector and collecting plates positioned facing each other at a distance of 22 mm. With plate potential values equal to + and - 3000V and a voltage applied to the ionization grid of - 5000 V, it is possible to obtain an approximately 80% reduction in particulate from 0.3 to 3 µm.

In accordance with a possible version of the invention, the plates, preferably flat, are placed vertically in order to allow possible condensate to run off. This is important because pools of liquid could cause discharge between the plates. The casing of the device can be tilted towards the outlet to sallow any liquid on the bottom to flow out or be pushed out by the gas stream. The device can be positioned so that the gas stream flows vertically. Some appropriately sized openings can be placed at the bottom of the casing to evacuate the liquid. For device fitting needs however, the plates can also advantageously be placed horizontally or even only at a slight angle. For example, a car generally has vertical dimensional restrictions; while, larger horizontal dimensions of the device would most likely be tolerated.

The device required to implement the method in accordance with the invention has the advantage of requiring little maintenance. In the case of some types of vehicles, it can be sized in order not to require any maintenance work during the useful life of the vehicle. Furthermore, the device hardly affects flow resistance, since it does not cause significant resistance to the flow of the treated gas. As was already mentioned, the particles tend to stick to the collecting plate permanently; thus, they are not released later. Furthermore, in the case of motor vehicles, there are no stages at engine start up or switch off when the device is ineffective as occurs, for example, with catalytic converters; this is because it suffices for the plates and grid to be supplied with current for them to operate at full efficiency.

With reference to the figures, a device for abating particulates in the exhaust gases of thermal engines or heating systems is also part of the invention. This device comprises the following: an inlet (10) for the exhaust gases, a dispersing structure (1), a set of parallel metal surfaces (6, 7) placed downstream from said inlet (10) of said structure (1), means for generating negative voltage in said dispersing structure, and means for generating positive voltage in at least part of said metal surfaces (6, 7), said metal surfaces (6, 7) being placed vertically (in the figures the device is shown in plan view).

## Claims

1. A method for abating particulates in a gas stream comprising the exhaust gases of a thermal engine or of a heating system, said method comprising the following steps:
a) Generating negative electric charges in an area through which said gas stream flows,
b) Passing said gas stream near one or more surfaces maintained at a potential able to attract particles with a negative electric charge; wherein said negative electric charges form an electron wind generated by a grid through which said gas stream flows, **characterised in that** said grid comprises a plurality of openings obtained by punching, so that the borders (3) of said openings feature micropoints for facilitating dispersion.

2. A method as claimed in claim 1 wherein the surfaces maintained at a potential able to attract negative electric charges are a set of metal collecting plates maintained at a positive potential with respect to earth.

3. A method as claimed in claim 2 wherein said collecting plates face a set of deflector plates maintained at a negative potential with respect to earth.

4. A method as claimed in any of the previous claims wherein steps a) and b) are repeated.

5. A method as claimed in any claim from 2 to 4 wherein said collecting plates are positioned vertically.

6. A device for abating particulates in the exhaust gases of thermal engines or heating systems comprising: an inlet (10) for the exhaust gases, a dispersing structure (1), a set of parallel metal surfaces (6, 7) placed downstream with respect to said inlet (10) of said structure (1), means for generating negative voltage in said dispersing structure, means for generating positive voltage in at least part of said metal surfaces (6, 7), and more than one duct (5) each obtained between a pair of said metal surfaces (6, 7) facing each other, wherein said dispersing structure is a grid through which a gas stream can flow, **characterised in that** said grid comprises a plurality of openings obtained by punching, so that the borders (3) of said openings feature micropoints for facilitating dispersion.

## Patentansprüche

1. Verfahren zur Abscheidung von Teilchen aus einem Gasstrom, welcher die Abgase einer Brennkraftmaschine oder eines Heizungssystems umfasst, wobei das genannte Verfahren die folgenden Schritte umfasst:
a) Erzeugung von negativen elektrischen Ladungen in einem Gebiet, durch welches der genannte Gasstrom tritt,
b) Vorbeileiten des genannten Gasstroms in der Nähe von einer oder mehreren Flächen, die auf einem Potenzial gehalten werden, welches geeignet ist, Teilchen mit negativer elektrischer Ladung anzuziehen, wobei die genannten negativen elektrischen Ladungen einen Elektronenwind bilden, der durch ein Gitter erzeugt wird, durch welches der genannte Gasstrom tritt, **dadurch gekennzeichnet, dass** das genannte Gitter mehrere Löcher umfasst, welche durch Stanzen dergestalt erhalten werden, dass die Ränder (3) der genannten Löcher sich durch mikroskopisch kleine Punkte auszeichnen, welche der Verbesserung der Feinverteilung dienen.

2. Verfahren nach Anspruch 1, bei welchem die Flächen, die auf einem Potenzial gehalten werden, das geeignet ist, negative elektrische Ladungen anzuziehen, einen Satz von metallischen Kollektorplatten darstellen, welche auf einem positiven Potenzial gegen Erde gehalten werden.

3. Verfahren nach Anspruch 2, bei welchem die genannten Kollektorplatten sich gegenüber einem Satz von Ablenkplatten befinden, welche auf negativem Potenzial gegen Erde gehalten werden.

4. Verfahren nach einem beliebigen der vorangehenden Ansprüche, bei welchem die genannten Schritte a) und b) wiederholt ausgeführt werden.

5. Verfahren nach einem beliebigen der Ansprüche 2 bis 4, bei welchem die genannten Kollektorplatten vertikal angeordnet sind.

6. Vorrichtung zur Abscheidung von Teilchen in den Abgasen von Brennkraftmaschinen oder Heizungssystemen, welche umfasst: eine Eintrittsöffnung (10) für die Abgase, eine Struktur zur Feinverteilung (1), einen Satz paralleler Metallflächen (6, 7), die sich in Strömungsrichtung hinter der genannten Eintrittsöffnung (10) der genannten Struktur (1) befinden, Mittel zur Erzeugung einer negativen Spannung in der genannten Struktur zur Feinverteilung, Mittel zur Erzeugung einer positiven Spannung auf mindestens einem Teil der genannten Metallflächen (6, 7) und mehr als ein Kanal (8), von denen jeder zwischen einem Paar der genannten, einander gegenüber befindlichen Metallflächen (6, 7) erhalten wird, wobei die genannte Struktur zur Feinverteilung ein Gitter ist, durch welches ein Gasstrom treten kann, **dadurch gekennzeichnet, dass** das genannte Gitter mehrere Löcher umfasst, welche durch Stanzen dergestalt erhalten werden, dass die Ränder (3) der genannten Löcher sich durch mikroskopisch kleine Punkte auszeichnen, welche der Verbesserung der Feinverteilung dienen.

## Revendications

1. Procédé de réduction des particules dans un courant gazeux comprenant les gaz d'échappement d'un moteur thermique ou d'un système de chauffage, ledit procédé comprenant les étapes suivantes :
a) générer des charges électriques négatives dans une zone à travers laquelle ledit courant gazeux s'écoule,
b) passer ledit courant gazeux près d'une ou de plusieurs surfaces maintenues à un potentiel capable d'attirer des particules présentant une charge électrique négative ; dans lequel lesdites charges électriques négatives forment un flux d'électrons généré par une grille à travers laquelle ledit courant gazeux s'écoule, **caractérisé en ce que** ladite grille comprend une pluralité d'ouvertures obtenues par poinçonnage, de sorte que les bords (3) desdites ouvertures présentent des micropoints pour faciliter la dispersion.

2. Procédé selon la revendication 1, dans lequel les surfaces maintenues à un potentiel capable d'attirer des charges électriques négatives sont un ensemble de plaques collectrices métalliques maintenues à un potentiel positif par rapport à la terre.

3. Procédé selon la revendication 2, dans lequel lesdites plaques collectrices sont en face d'un ensemble de plaques de déviation maintenues à un potentiel négatif par rapport à la terre.

4. Procédé selon l'une quelconque des revendications précédentes, dans lequel les étapes a) et b) sont répétées.

5. Procédé selon l'une quelconque des revendications 2 à 4, dans lequel lesdites plaques collectrices sont positionnées verticalement.

6. Dispositif pour réduire les particules dans des gaz d'échappement de moteurs thermiques ou de systèmes de chauffage comprenant : un orifice d'entrée (10) pour les gaz d'échappement, une structure de dispersion (1), un ensemble de surfaces métalliques parallèles (6, 7) placé en aval dudit orifice d'entrée (10) de ladite structure (1), des moyens pour générer une tension négative dans ladite structure de dispersion, des moyens pour générer une tension positive dans au moins une partie desdites surfaces métalliques (6, 7), et plus d'un conduit (5), chacun étant obtenu entre une paire desdites surfaces métalliques (6, 7) se trouvant l'une en face de l'autre, dans lequel ladite structure de dispersion est une grille à travers laquelle un courant gazeux peut s'écouler, **caractérisé en ce que** ladite grille comprend une pluralité d'ouvertures obtenues par poinçonnage, de sorte que les bords (3) desdites ouvertures présentent des micropoints pour faciliter la dispersion.
